# EUROPEAN PATENT APPLICATION

(11) **EP 3 825 216 A1**
(43) Date of publication of application: **26.05.2021**
(21) Application number: 19211231.6
(22) Date of filing: 25.11.2019
(51) Int. Cl.: B62K 19/30, B62M 6/90

(54) **BICYCLE FRAME WITH BATTERY CARRIER**

(71) Applicant: Stella Fietsen B.V., 8072 PD Nunspeet (NL)
(72) Inventor: DE VISSER, Alexander Paul Johannus, 8076 PM Vierhouten (NL); VAN DEN HOORN, Daniël, 8071 BT Nunspeet (NL); VAN DER WONING, Mark Ronald, 8441 GE Heerenveen (NL)
(74) Representative: DeltaPatents B.V.

(57) **Abstract**

The present invention resides in a bicycle frame (120) of an electric bicycle (100) comprising a head tube (125), a seat tube (121) and a down tube (122), whereby a lower end of the down tube and a lower end of the seat tube are interconnected at a bottom bracket area (128) of the frame, whereby the frame is adapted for mounting a removable, rechargeable battery (130) having an elongated battery casing. The frame is provided with separate upper and lower battery tube sections (131, 132) between which the battery is mounted, which tube sections have the same cross-sectional shape as the battery casing, such that in mounted condition, the battery casing and the upper and lower battery tube sections appear to form a continuous battery tube element that extends adjacent to a structural tube of the frame, being one of the down tube (122) and the seat tube (121), but is not supported on said structural tube.

## Description

### FIELD OF THE INVENTION

The invention relates to a frame of an electric bicycle having a number of structural tubes and a removable battery that appears to form part of the frame.

### BACKGROUND ART

Pedal-assist bicycles incorporating an electric motor, also referred to as e-bikes, are becoming increasingly popular. The frame of an e-bike largely corresponds to that of a conventional bicycle and has main structural elements that include: a head tube, in which the handlebar shaft rotates; a seat tube that houses the seat post for the saddle; a bottom bracket at a lower end of the seat tube and a down tube that connects the head tube and the seat tube in the region of the bottom bracket.

In many commercially available e-bikes, the battery pack for powering the motor is mounted on the luggage rack, above the rear wheel. Solutions are also known in which a detachable battery pack is embedded in one of the main structural tubes of the frame. US 7934576, for example, discloses a frame formed from interconnected tube sections, whereby one of the sections e.g. the seat tube is constituted by a hollow section having multiple chambers. The battery pack is predominantly arranged in a cutout in one or more of the multiple chambers, whereby at least one of the multiple chambers remains substantially intact.

An advantage of embedding a detachable battery pack in a cutout in one the main structural tubes of the frame is that the battery pack may be adapted to the shape of the tube, such that it blends in with the frame, improving the overall appearance of the bicycle. The battery may even be imperceptible, thereby reducing the risk of theft or malicious removal of the battery. A disadvantage of implementing a cutout in a structural tube is that the tube must be executed with multiple chambers or sections, or must be otherwise reinforced to provide sufficient strength and stiffness to the construction as a whole. This necessarily adds to the complexity of the frame design and manufacture. Furthermore, the the battery pack battery may require a complex geometry in order to fit seamlessly within the cut-out.

There is still room for improvement.

### SUMMARY OF THE INVENTION

The present invention resides in a bicycle frame of an electric bicycle comprising a head tube, a seat tube and a down tube, whereby a lower end of the down tube and a lower end of the seat tube are interconnected at a bottom bracket of the frame, whereby the frame is adapted for mounting a removable, rechargeable battery having an elongated battery casing. According to the invention the frame is provided with separate upper and lower battery tube sections between which the battery is mounted. The aforementioned tube sections and the battery casing have the same cross-sectional shape, such that in mounted condition, the battery casing and the upper and lower battery tube sections appear to form a continuous battery tube element that extends adjacent to a structural tube of the frame, being one of the head tube and the seat tube, but is not supported on said structural tube.

The provision of separate tube sections on the frame for receiving the battery enables freedom of choice in matching the cross-sectional shape to that of the battery casing. Furthermore, the structural tube of the frame can be executed with a straightforward geometry that remains intact over its full length.

The lower battery tube section is arranged at the bottom bracket area and has an end face for mounting and supporting one end face of the battery casing. An opposite end face of the battery casing is mounted to a corresponding end face of the upper battery tube section.

In a first configuration, the structural tube is the seat tube and the upper battery tube section is arranged on the frame in a region close to an upper end of the seat tube, e.g. close to a seat clamp of the seat tube. In a second configuration, the structural tube is the down tube and the upper battery tube section is arranged at the head tube.

Suitably, the continuous battery tube element formed by the upper and lower battery tube sections and the battery casing is arranged close to the structural tube, such that it appears to form one of the frame tubes.

In embodiments of the first configuration, where the seat tube is the structural tube, the continuous battery tube element may have essentially the same cross-sectional size and shape as the down tube, and is suitably executed in the same colour. The upper and lower battery tube sections and the battery casing may be made from the same material as the down tube, or may be made from a different material that has the same external finish as the down tube. This enhances the appearance of the frame during use

Similarly, in embodiments of the second configuration where the down tube is the structural tube, the continuous battery tube element may have essentially the same cross-sectional size and shape as the seat tube and is suitably executed in the same colour. The upper and lower battery tube sections and the battery casing may be made from the same material as the seat tube, or may be made from a different material that has the same external finish as the seat tube. This enhances the appearance of the frame during use.

When the battery is removed, for recharging or to prevent its theft when the bicycle is parked, the frame appears to be missing a structural tube. This has the advantage that the bicycle is less likely to be a target for thieves.

In one embodiment, the upper and lower battery tube sections and the battery casing have a fully circular cross-section. Such a straightforward geometry is easy to manufacture, enables efficient placement of battery elements within the casing and allows the battery to be mounted to the tube sections in any orientation.

In a further embodiment, the cross-sectional shape of the battery tube sections and of the battery casing is adapted such that in mounted condition, part of the battery casing and the tube sections overlap an outer surface of the structural tube that faces towards the battery casing. This enhances the illusion that the continuous tube element is an integral part of the frame.

In one example, the structural tube is a single walled square tube and the battery casing has a flat portion that faces towards the aforementioned outer surface. The remaining portion of the casing may be substantially circular, whereby the flat portion forms a recess in which the top surface of the structural tube is received.

In a further example, the structural tube is rectangular or comprises a rectangular protrusion. The battery casing and the battery tube sections may have an essentially U-shaped cross-section, such that part of the rectangular tube or the rectangular protrusion is received within a recess formed in the U-shaped cross-section. The degree of overlap may be optimised to further enhance the illusion that the continuous tube element formed by the battery and battery tube section is a structural part of the frame.

The lower battery tube section may be connected to the frame at the bottom bracket area via bolts, welding, bonding or any suitable joining method. Alternatively, the lower battery tube element be integrally formed as an extension of the bottom bracket. As will be understood, the lower battery tube section is not only provided with means for the mechanical connection of the battery, but also houses any connection means that are necessary for the electrical connection of the battery.

Similarly, in the first configuration, the upper battery tube section may be attached to the upper end of the seat tube via bolts, welding or bonding and is adapted for mechanical connection of the battery and, where necessary, for electrical connection as well. The upper battery tube section may also be integrally formed as part of a frame element that comprises the seat stays.

Furthermore, in embodiments where the frame comprises a top tube that connects the head tube and an upper end of the seat tube, the upper battery tube section may also be connected to the top tube, or may form an integral part of the top tube.

The structural tube of the frame, i.e. the seat tube in the first configuration and the down tube in the second configuration is preferably formed from a single-walled tube, for ease of manufacture. As mentioned, the structural tube remains intact over its full length. The frame of the invention therefore enables a battery to be incorporated in the frame, without affecting structural integrity.

These and other advantages of the invention will become apparent from the following detailed description and accompanying drawings.

### BRIEF DESCRIPTION OF THE DRAWINGS

The invention will now be further elucidated with reference to the embodiments described hereinafter. In the drawings,
- Fig. 1a: shows a perspective view of a bicycle comprising a frame according to the invention, in a first configuration, prior to mounting of a battery
- Fig. 1b: shows a perspective view of upper and lower battery tube sections and a structural tube (seat tube) of the frame from Fig. 1a, in isolation, and a casing of the battery prior to mounting;
- Fig. 1c: shows a perspective view of the bicycle from Fig. 1a with mounted battery;
- Fig. 1d: shows a cross-sectional view of the structural tube and battery in mounted condition;
- Fig. 2: shows a cross-sectional view of a structural tube and a second example of a battery in mounted condition;
- Fig. 3: shows a cross-sectional view of a further example of a structural tube and a third example of a battery in mounted condition;
- Fig. 4a: shows a perspective view of a bicycle comprising a frame according to the invention, in a second configuration, prior to mounting of a battery
- Fig. 4b: shows the bicycle with mounted battery.

It should be noted that items which have the same reference numbers in different figures, have the same structural features and the same functions. Where the function and/or structure of such an item has been explained, there is no necessity for repeated explanation thereof in the detailed description.

### DETAILED DESCRIPTION OF EMBODIMENTS

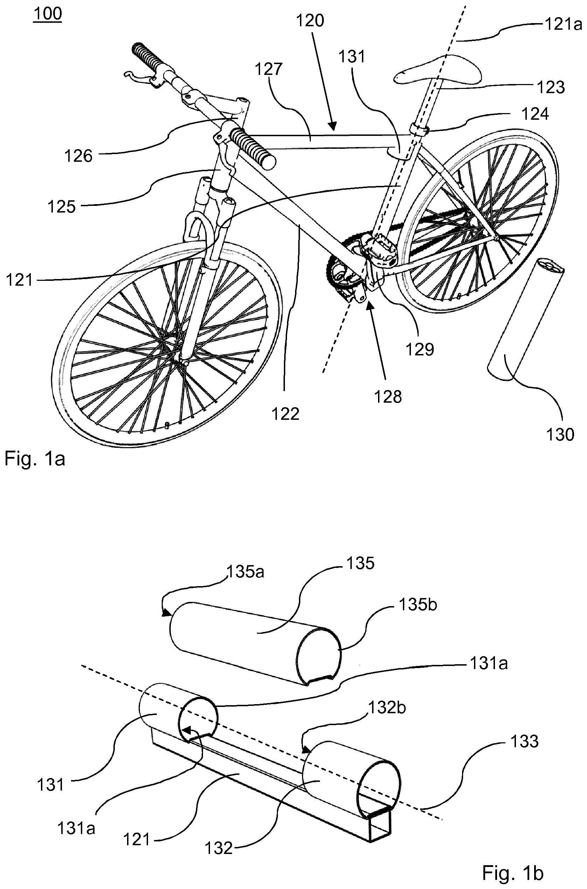

Fig. 1a shows a perspective view of an electric bicycle 100 provided with an example of a frame 120 according to the invention in a first configuration. The frame includes a number of interconnected frame tubes which provide the frame with strength and rigidity. The frame tubes include at least a seat tube 121 and a down tube 122. At an upper end, the seat tube 121 receives a seat post 123 and saddle of the bicycle, which is adjustable in height via a seat post clamp 124. The down tube 122 is connected to a head tube 125, which receives a handlebar shaft 126. In the depicted example, the frame further comprises a top tube 127 that interconnects the head tube 125 and the upper end of the seat tube 123. The bicycle may also be executed as a low-entry model, i.e. as a "lady's bike", without a top tube.

A lower end of the seat tube 121 and of the down tube 122 are joined together at a bottom bracket area 128 of the frame, where the spindle and bearings for the pedal cranks 129 are arranged. The bicycle is also provided with an electric motor (not shown), which may be arranged at one of the wheel hubs or may also be arranged at the bottom bracket 128. The motor is powered by a rechargeable battery 130, which in accordance with the invention is mounted to the frame via an upper 131 and a lower battery tube section 132 (see Fig. 1b).

Also with reference to Fig. 1b, which shows an outer casing 135 of the battery, prior to mounting, and shows the seat tube 121 and the upper and lower battery tube sections in isolation, the upper battery tube section 131 has a battery mounting interface 131a formed by an end face of the tube section 131. The lower battery tube section 132 has a corresponding battery mounting interface 132b formed by an end face of the tube section 132.

The lower battery tube section 132 may be joined to the frame at the bottom bracket 128 via bolts, welding, bonding or other suitable joining method. The lower tube section may also be integrally formed as an extension of the bottom bracket. A portion of the lower battery tube section 132, which comprises the battery mounting interface 132b, extends from the bottom bracket adjacent to the lower end of the seat post 131. The upper battery tube section 131 is attached to the frame close to the seat post clamp 124 and extends adjacent to the upper end of the seat tube 121. The upper battery tube section may also be joined to the top bar 127 or be integrally formed as an extension of the top bar. Suitably, the upper and lower battery tube sections are arranged so as to have a common longitudinal centre axis 133, which is parallel to a longitudinal centre axis 121a of the seat tube 121. Furthermore, the battery outer casing 135 has the same cross-sectional shape as the upper and lower battery tube sections 131, 132, whereby opposite end faces 135a, 135b of the outer casing 135 are adapted to mate with the mounting interface 131a, 132b of the respective battery tube sections 131, 132.

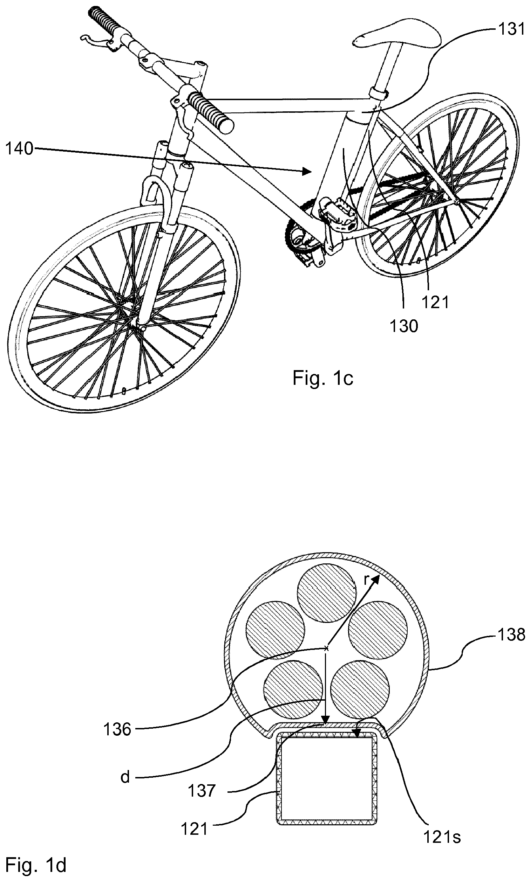

When the battery 130 is mounted to the frame, as shown in Fig. 1c, the upper and lower tube sections 131, 132 and the outer casing of the battery form a continuous tube element 140 adjacent to and close to the seat tube 121. This tube element 140 therefore appears to form part of the frame structure, although it is the seat tube 121 which is a load-bearing, structural tube of the frame.

Fig. 1d shows a cross-section through the seat tube and battery when the battery is in mounted condition. In the depicted embodiment, the structural seat tube 121 is a square tube having an outer surface 121s that faces the battery casing and a portion 137 of the battery outer casing that is immediately adjacent to the seat tube outer surface 121s has a correspondingly flat surface. A remaining portion 138 of the outer casing 135 is curved and is shaped to resemble a circular tube, which has an axial centerline 136 and radius r.

Preferably, the flat portion 137 of the casing is recessed relative to the radius of the circular portion 138. In other words, a distance d from the axial centerline 136 to an inner wall of the flat portion 137 is smaller than the radius r. The recessed flat portion 137 is dimensioned such that that outer surface 121s of the seat tube can be received within the recess. In mounted condition there is consequently a small overlap between the circular portion 138 of the battery casing and the outer surface 121s of the seat tube. This enhances the illusion that the battery casing 135 and upper and lower battery tube sections 131, 132 are structural elements of the frame.

As may be seen from Fig. 1d, the battery outer casing does not bear against the seat tube. A slight gap is maintained between the outer surface 121s of the seat tube and the opposing surface of the battery casing. It is also possible for the battery casing and the seat tube to be in contact, but the battery is not supported on the seat tube. The battery is mechanically connected and electrically connected to the frame via the separate battery tube sections 131, 132. This allows the seat tube to remain intact over its full length, and enables freedom of design with regard to matching the cross-sectional shape of the battery tube sections to that of the battery casing.

When the battery is removed, for recharging or to prevent theft of the battery when the bicycle is parked, the frame appears to be missing an entire tube section. Although the structural integrity of the frame is not affected, the upper and lower tube sections adjacent to the seat tube give this impression and will deter theft of the parked bicycle when the battery is not present.

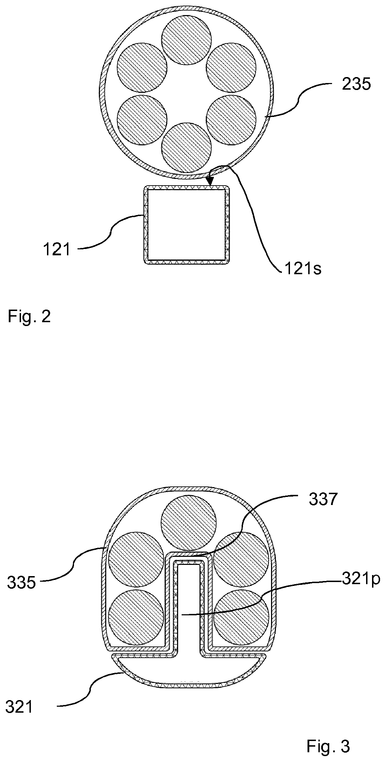

In an alternative example, the upper and lower battery tube sections and the battery casing have a fully circular cross-section. Fig. 2 shows a cross-section through the seat tube and the battery when it is mounted to a bicycle frame provided with battery tube sections of this shape. The structural seat tube 121 may again have a square cross-section. The battery casing 235 has a circular outer circumference, whereby opposite ends are attached to respective circular mounting interfaces on the upper and lower battery tube sections. A circular geometry is extremely economical to manufacture and has the further advantage of enabling the battery to be connected in any angular orientation.

In a further alternative, as shown in Fig. 3, the structural tube, for example the seat tube 321, may be executed with a protrusion and the battery casing may be executed with a recess, such that in mounted condition the battery fits over the protrusion.

In the depicted example, the structural tube 321 of the frame has an essentially T-shaped cross-section. A leg of the T-shape forms a rectangular protrusion 321a that extends towards the battery. The battery casing 335 has an essentially U-shaped cross-section and has a rectangular recess 337 into which the rectangular protrusion is received. The large degree of overlap between the battery and the structural tube 321 enhances the illusion that the battery is part of the frame structure.

In the first configuration of a frame according to the invention, the upper battery tube section is provided on the frame in the region of the seat clamp 124 and the continuous tube element 140 formed by the battery casing and the upper and lower tube sections 131, 132 extends adjacent to the seat tube and the battery therefore appears to form part of the seat tube.

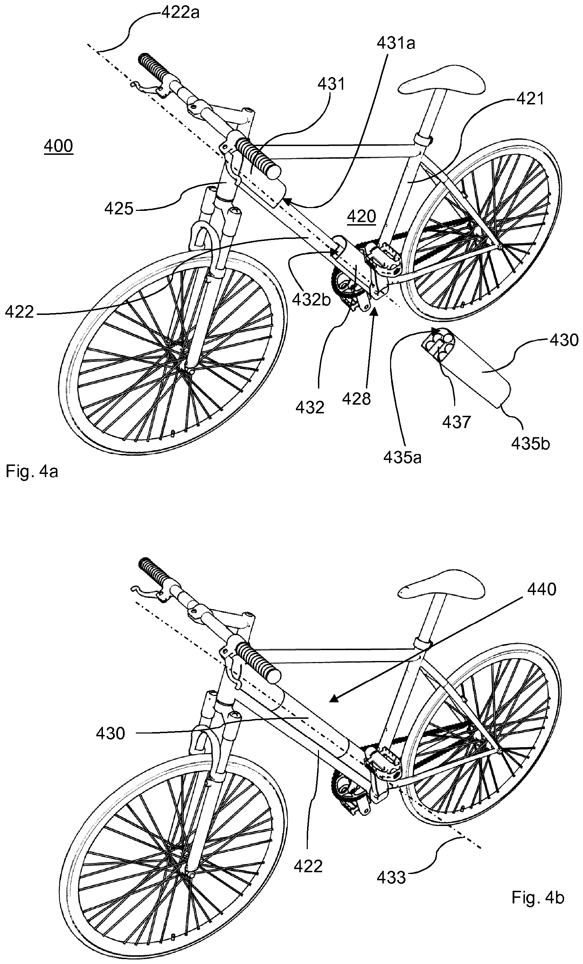

In a second configuration, the battery appears to form part of the down tube. An example of a bicycle 400 comprising a frame in the second configuration is shown in Figs 4a and 4b, in which a battery 430 such as depicted in Fig. 3 is shown prior to and after mounting respectively.

The frame 420 comprises the lower battery tube section 432, whereby an end face thereof is connected to the frame at the bottom bracket 428, via bolts, welding, bonding or other suitable joining method. The lower battery tube section may also be integrally formed as an extension of the bottom bracket. An outer end face of the lower tube section 432 serves as the mounting interface 432b for receiving a corresponding end face 435b of the battery. The upper battery tube section 431 is connected at an end face thereof to the head tube 425, via bolts, welding bonding or other suitable joining method. The opposite end face of the upper tube section 431 serves as the mounting interface 431a for receiving the corresponding end face 435a of the battery 430. Suitably, the upper and lower battery tube 431, 432 sections are arranged so as to have a common longitudinal centre axis 433 (see Fig. 4b), which is parallel to a longitudinal centre axis 422a of the down tube (see Fig. 4a).

Each tube section 431, 432 has an essentially U-shaped cross-section and has a recess that fits over the structural down tube 422. As explained with reference to Fig. 3, the down tube may have an essentially T-shaped cross-section with a rectangular protrusion or may have an essentially rectangular cross-section that fits within the recess in battery tube sections and within the corresponding recess 437 in the battery 430.

When the battery is mounted, as shown in Fig. 4b, the battery outer casing 435 and the upper and lower battery tube sections 431, 431 form a continuous tube element 440 that appears to form part of the structural frame of the bike.. The down tube 422 remains intact over its full length. The inventive frame in the second configuration thus also enables incorporation of the battery without affecting structural integrity.

Examples, embodiments or optional features, whether indicated as non-limiting or not, are not to be understood as limiting the invention as claimed. It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

### Reference numerals

- 100, 400: bicycle
- 121, 321 421: seat tube (structural tube)
- 121a: longitudinal axis of seat tube
- 121s: outer surface of seat tube
- 321p: rectangular protrusion of structural tube
- 122, 422: down tube (structural tube)
- 422a: longitudinal axis of down tube
- 123: seat post
- 124: seat clamp
- 125, 425: head tube
- 126: handlebar shaft
- 127: top tube
- 128, 428: bottom bracket
- 129: pedal crank
- 130, 430: battery
- 131, 431: upper battery tube section
- 131a, 431a: connection interface for battery
- 132, 432: lower battery tube section
- 132b, 432b: connection interface for battery
- 133, 433: longitudinal centre axis through battery tube sections
- 135, 235, 335, 435: battery casing
- 135a, 135b, 435a, 435b: connection end faces of battery casing
- 136: centre axis of battery
- 137: flat portion of battery casing
- d: distance from centre axis to flat portion
- 138: circular portion of battery casing
- r: radius of circular portion
- 140, 440: continuous tube element formed by battery, upper and lower tube sections
- 337, 437: recess in battery casing

## Claims

1. Bicycle frame (120, 420) of an electric bicycle (100, 400) comprising a head tube (125, 425), a seat tube (121, 421) and a down tube (122, 422), whereby a lower end of the down tube and a lower end of the seat tube are interconnected at a bottom bracket (128, 428) of the frame, whereby the frame is adapted for mounting a removable, rechargeable battery (130, 430) having an elongated battery casing (135, 235, 335, 435), and comprises:
• a lower battery tube section (132, 432) arranged at the bottom bracket and having an end face (132b, 432b) for mounting and supporting a corresponding end face (135b, 435b) of the battery casing;
• an upper battery tube section (131, 431) having an end face (131a, 431a) for mounting and supporting a corresponding end face (135a, 135b) of the battery casing, wherein
- the upper and the lower battery tube sections and the battery casing have the same cross-sectional shape, and are arranged such that when the battery is in mounted condition, the battery casing and the upper and lower battery tube sections appear to form a continuous tube element (140, 440) that extends adjacent to a structural tube of the frame, being one of the seat tube and the down tube, whereby said structural tube remains intact over its full length, and wherein
- in a first configuration, the structural tube (121) is the seat tube and the upper battery tube section (131) is arranged on the frame in a region close to an upper end of the seat tube; and
- in a second configuration, the structural tube (422) is the down tube and the upper battery tube section (431) is arranged on the frame at the head tube (425).

2. Bicycle frame according to claim 1, wherein the structural tube (121, 321, 422) is formed by a single-walled tube.

3. Bicycle frame according to claim 1 or 2, wherein the upper and lower battery tube sections (131, 132; 431, 432) and the battery casing (235) have a circular cross-section.

4. Bicycle frame according to claim 1 or 2, wherein at least a portion of the continuous battery tube element (140, 440) overlaps the structural tube (121, 321, 422).

5. Bicycle frame according to claim 3, wherein the structural tube has a flat outer surface (121s), the continuous battery tube element (140, 440) has a flat portion (137) and a circular portion (138), whereby the flat portion forms a recess in which the outer surface (121s) of the structural tube is received.

6. Bicycle frame according to claim 3, wherein the continuous battery tube element (140, 440) has an essentially U-shaped cross-section and wherein at least a portion of the structural tube (321, 422) is received in a rectangular recess (337, 437) in the continuous battery tube element (440).

7. Bicycle frame according to claim 6, wherein the structural tube (321, 422) comprises a rectangular protrusion (321) which is received in the rectangular recess (337, 437).

8. Bicycle frame according to claim 7, wherein the structural tube has an essentially T-shaped cross-section.

9. Bicycle frame according to any preceding claim, wherein the lower battery tube section (132, 432) is joined to the bottom bracket (128, 428) via bolts, welding or adhesive bonding, or is integrally formed as an extension of the bottom bracket.

10. Bicycle frame according to any preceding claim, the frame further comprising a top tube (127);

11. Bicycle frame according to claim 10, in the first configuration, wherein the upper battery tube section (131) is connected to the top tube (127) or is integrally formed with the top tube.

12. Bicycle frame according any of claims 1 to 10, in the first configuration, wherein the upper battery tube section is formed as part of a frame element comprising seat stays and wherein said frame element is attached to the seat tube (121).

13. Bicycle frame according to any preceding claim, wherein in the first configuration, the down tube (122) and the continuous battery tube element (140) have the same cross-sectional size and shape and wherein in the second configuration, the seat tube (421) and the continuous battery tube element (440) have the same cross-sectional size and shape.
